Europäisches Patentamt

European Patent Office

Office européen des brevets

(19)

(11) Numéro de publication: **0 311 466 B1**

(12)    **FASCICULE DE BREVET EUROPEEN**

(45) Date de publication du fascicule du brevet:
09.10.91 Bulletin 91/41

(51) Int. Cl.⁵: **B62D 23/00, B62D 65/00**

(21) Numéro de dépôt: **88402108.0**

(22) Date de dépôt: **12.08.88**

(54) **Structure de véhicule automobile à caisse monocoque et son procédé de montage.**

(30) Priorité: **07.10.87 FR 8713864**

(43) Date de publication de la demande:
**12.04.89 Bulletin 89/15**

(45) Mention de la délivrance du brevet:
**09.10.91 Bulletin 91/41**

(84) Etats contractants désignés:
**DE GB IT**

(56) Documents cités:
**EP-A- 0 127 225
EP-A- 0 171 576
EP-A- 0 226 212
FR-A- 873 055**

(73) Titulaire: **AUTOMOBILES PEUGEOT**
**75, avenue de la Grande Armée**
**F-75116 Paris (FR)**
Titulaire: **AUTOMOBILES CITROEN**
**62 Boulevard Victor-Hugo**
**F-92200 Neuilly-sur-Seine (FR)**

(72) Inventeur: **Froumajou, Armand**
**11 bis, rue Docteur Laennec**
**F-95520 Osny (FR)**

(74) Mandataire: **Kohn, Philippe et al**
**c/o CABINET LAVOIX 2, place d'Estienne**
**d'Orves**
**F-75441 Paris Cédex 09 (FR)**

EP 0 311 466 B1

Jouve, 18, rue Saint-Denis, 75001 PARIS

## Description

La présente invention a pour objet une structure de véhicule automobile à caisse monocoque.

L'invention a plus particulièrement pour but de faciliter le montage des éléments mécaniques et des éléments du poste de conduite d'un véhicule automobile et plus particulièrement d'en permettre le montage automatisé à grande cadence.

Il a déjà été proposé de constituer différents modules dont chacun comprend un grand nombre d'organes assemblés au préalable, venant se monter directement sur la caisse du véhicule. Un module avant, ou bloc avant, supporte, au moyen d'un berceau approprié, le groupe motopropulseur, le radiateur de refroidissement, éventuellement équipé d'un ou plusieurs motoventilateurs, la batterie d'accumulateur, une partie du câblage du faisceau électrique, le train roulant avant, et la crémaillère de direction. Un autre module de poste de conduite, peut comporter la colonne de direction, le pédalier, le bloc de climatisation et/ou de ventilation, et la planche de bord du véhicule.

Il a déjà été également proposé divers modes de montage de ces modules sur la caisse du véhicule. Par exemple le document FR-A-1.014.103 décrit et représente un procédé de montage du module avant sur la caisse du véhicule par translation verticale de bas en haut de cette dernière. Le document EP-A-124093 propose de procéder au montage du module de poste de conduite, de l'arrière vers l'avant, ou de haut en bas, l'ensemble du module ayant été préalablement introduit à l'intérieur de la caisse du véhicule par la porte avant de ce dernier.

Cette conception à base de modules constitue un progrès considérable dans l'assemblage et le montage industriel d'un véhicule automobile, tant par la rapidité et par la fiabilité du montage ainsi effectué, que par l'amélioration notable des conditions de travail du personnel effectuant les opérations d'assemblage et de montage.

Cependant on constate que des connexions multiples entre les modules sont à effectuer sur le véhicule lui-même par exemple celles de la colonne de direction, du câble d'embrayage, des commandes d'accélérateur, de starter, d'ouverture de capot, du flexible du tachymètre, etc.

Le principe de la conception d'un véhicule en divers modules nécessite également des jonctions, ou raccordements supplémentaires tant en ce qui concerne le faisceau électrique, que les circuits de fluide du véhicule. D'autre part, bien que le module avant comprenne l'ensemble des fonctions du groupe motopropulseur, il n'est cependant pas possible de remplir le circuit de refroidissement, et par conséquent d'en vérifier préalablement le fonctionnement, avant l'opération de montage puisque l'aérotherme du bloc de climatisation, qui est relié au circuit de refroidissement, est intégré au module de poste de conduite.

Le document EP-A-127225 décrit et représente un véhicule automobile qui comprend un module avant comprenant les organes mécaniques, c'est-à-dire le groupe motopropulseur et ses annexes, le train avant et la crémaillère de direction, le tablier avant, et les organes constitutifs du poste de conduite, c'est-à-dire la colonne de direction, le pédalier, les combinés de commande des divers organes du véhicule, le bloc de climatisation, etc. Ce document décrit également une caisse de véhicule adaptée pour recevoir le module, c'est-à-dire comportant une ouverture formée dans la partie avant d'habitacle, celle-ci s'étendant de la partie inférieure du pare-brise, ou de la structure qui y est reliée, jusqu'à la partie avant du plancher de la caisse du véhicule. Le module avant comporte une plaque transversale qui sépare l'habitacle du compartiment moteur, et la caisse comprend une partie avant amovible pour permettre le montage de la partie principale de la caisse sur le module avant par approche en position inclinée puis pivotement autour d'un axe transversal. Cette opération d'assemblage et de montage est délicate à réaliser. De plus la partie de caisse doit être démontée pour accéder aux parties mécaniques situées en avant de la plaque transversale, et celle-ci doit être d'une très grande rigidité pour transmettre à la partie principale de la caisse du véhicule les efforts, transmis au module avant, notamment par les organes de suspension avant.

Afin de remédier aux inconvénients qui viennent d'être mentionnés, l'invention propose une structure de véhicule automobile à caisse monocoque comportant à l'avant d'un habitacle, entre une extrémité d'un plancher et une traverse de baie de pare-brise, une ouverture obturée par une paroi transversale faisant partie d'un module qui comprend, en avant de la paroi, un groupe motopropulseur avec ses organes annexes et un train de roues avant avec ses organes de suspension, de freinage et de direction, et, en arrière de la paroi, un boîtier d'un dispositif de climatisation et un poste de conduite comportant une colonne de direction inclinée qui est introduite dans l'habitacle par ladite ouverture lors de l'opération d'assemblage du module avec la caisse du véhicule, caractérisée en ce que la caisse monocoque comporte une partie avant qui s'étend en avant de la baie de pare-brise, repose sur le train de roue avant, et qui présente un évidement inférieur central recevant une partie du module, cet évidement et ladite ouverture étant conformés de manière à permettre l'engagement du module dans la caisse lors d'un mouvement relatif d'approche de la caisse par rapport au module par une translation horizontale, ou inclinée sensiblement comme la colonne de direction, suivi d'un mouvement relatif de positionnement et de montage par une translation verticale.

Selon d'autres caractéristiques :

— le module comporte un berceau qui porte lesdits groupe et organes, la paroi transversale étant fixée au berceau ;

— la paroi transversale est fixée au berceau par soudage ou par boulonnage ;

— le berceau comporte une traverse agencée à proximité de l'extrémité avant du plancher de la caisse ;

— le berceau comporte deux longerons latéraux reliés à la traverse dont les parties avant comportent des moyens de liaison pour les organes de suspension, et dont les parties arrière comportent des moyens de fixation permettant de les relier à la caisse du véhicule sous le plancher ; et

— le module peut également comporter en outre des organes de commande, notamment d'une boîte de vitesses et/ou d'un frein de stationnement, portés par une platine qui obture une fenêtre pratiquée dans le plancher et qui est dimensionnée de manière à permettre l'introduction des organes de commande dans l'habitacle lors de l'opération de montage du module sur la caisse du véhicule par lesdits mouvements d'approche et de montage.

L'invention propose également un procédé de montage d'un véhicule automobile dont la structure est conforme à l'invention et qui est caractérisé en ce que le module, préalablement équipé desdits groupe et organes, et la caisse sont, au cours d'une étape d'approche, déplacés relativement l'un par rapport à l'autre par une translation horizontale, ou inclinée sensiblement comme la colonne de direction, de manière à introduire le boîtier du dispositif de climatisation et le poste de conduite dans l'habitacle par ladite ouverture, puis, au cours d'une étape de positionnement et de montage, déplacés relativement suivant une translation verticale de manière à amener lesdits organes de suspension en appui contre une zone d'appui correspondante de la partie avant de la caisse, et en ce qu'il sont enfin fixés l'un à l'autre par boulonnage au droit d'une partie rigide du module, et par collage ou boulonnage du pourtour de la paroi transversale sur le pourtour de ladite ouverture.

Enfin selon une variante du procédé le module et divers organes du véhicule, tels qu'un train de roue arrière, un dispositif d'échappement, des circuits électriques ou hydrauliques, sont préalablement agencés et maintenus sur un bâti de montage, la caisse étant déplacée relativement à ce bâti suivant lesdits mouvements d'approche et de montage.

D'autres caractéristiques et avantages de l'invention apparaîtront plus clairement à la lecture de la description détaillée de l'invention qui va suivre pour la compréhension de laquelle on se reportera aux dessins annexés dans lesquels :

— La figure 1 est une vue latérale du module avant selon l'invention ;

— la figure 2 est une vue de dessus du module de la figure 1 ;

— la figure 3 est une vue en coupe partielle selon la ligne 3-3 de la figure 4 de la partie avant de la caisse monocoque de la structure de véhicule selon l'invention ;

— la figure 4 est une vue de dessus de la partie de caisse de la figure 3 ;

— la figure 5 est une vue illustrant le mouvement d'approche par une translation inclinée sensiblement comme la colonne de direction de la caisse par rapport au module ;

— la figure 6 est une vue montrant le mouvement relatif de positionnement et de montage par une translation verticale de la caisse par rapport au module ;

— la figure 7 représente une variante de l'invention dans laquelle une caisse monocoque complète de véhicule est approchée selon un mouvement d'approche incliné par rapport à un bâti relié au module avant et équipé d'autres organes du véhicule tels que notamment un train de roue arrière ; et

— la figure 8 est une vue similaire à celle de la figure 7 montrant le mouvement de positionnement et de montage de la caisse selon une translation verticale par rapport au module avant.

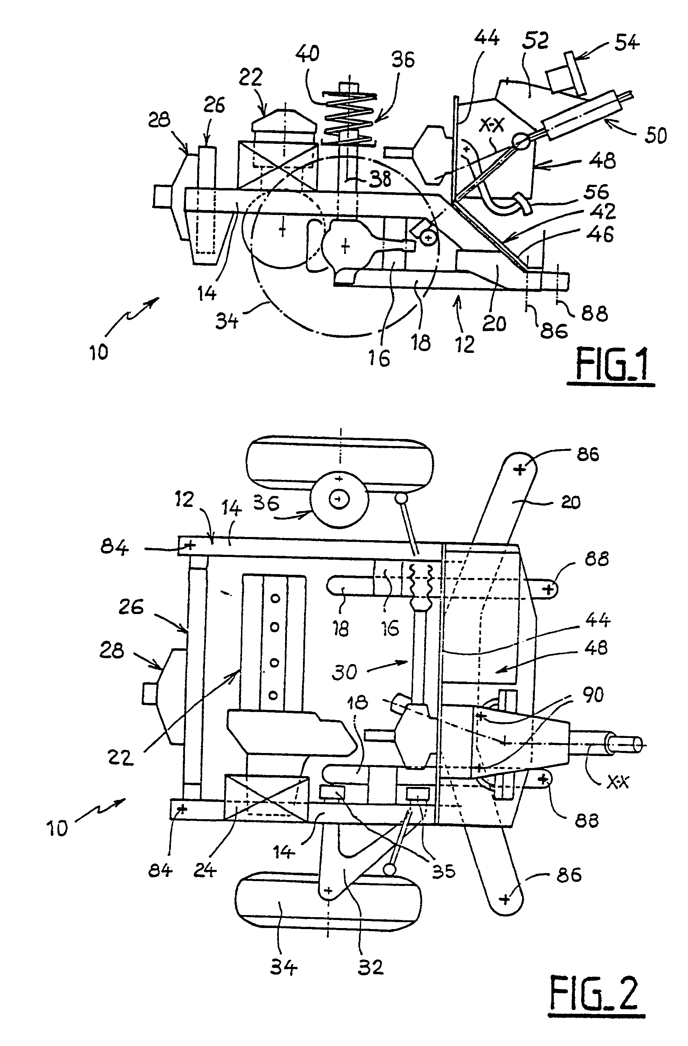

Le module avant 10 représenté aux figures 1 et 2 comporte un berceau 12 constitué de deux longerons de berceau 14. Les longerons 14 sont reliés, au moyen de pattes 16 à des longerons de liaison 18 qui sont soudés sur une traverse 20 qui est prévue pour être agencée à proximité de l'extrémité du plancher avant de la caisse du véhicule.

Un groupe motopropulseur 22 est porté par le berceau 12 qui supporte également ses organes annexes tels qu'une batterie 24 et un radiateur 26 équipé de son motoventilateur 28. Une crémaillère de direction 30 est fixée par exemple sur la traverse 20. Les triangles de suspension inférieurs 32 relient les roues avant 34 du véhicule au berceau 12 au moyen d'articulations 35 montées sur les longerons de liaison 18 du berceau 12. Les organes de freinage, non représentés, et les organes de suspension 36, comprenant notamment un amortisseur 38 et un ressort 40, sont également agencés sur le module avant 10.

L'ensemble des groupe et organes qui viennent d'être mentionnés et qui équipent le module avant 10 sont agencés à l'avant d'une paroi transversale 42 fixée au module avant 10.

La paroi transversale 42, qui comme cela sera expliqué plus loin, constitue une partie de la paroi de l'habitacle de la caisse du véhicule automobile, plus précisément la partie sensiblement verticale 44 appelée tablier du véhicule, se prolonge à sa partie inférieure par une partie inclinée 46 qui constitué la partie antérieure du plancher du véhicule.

La paroi, ou cloison, transversale 42 sert de support à divers composants situés en arrière de cette paroi, en considérant la direction de déplacement en marche avant du véhicule. Ces divers composants comprennent notamment un boîtier 48 d'un dispositif de climatisation et/ou de ventilation du véhicule, une colonne de direction 50 inclinée par rapport au plan horizontal sur lequel se déplace le véhicule selon un axe X-X. La colonne de direction 50 fait partie d'un poste de conduite 52 comportant un tableau de bord 54.

Le module avant 10 qui vient d'être décrit permet de réaliser en dehors de la caisse de véhicule automobile, et donc avec une très grande accessibilité mécanique, toutes les opérations d'assemblage, de connection mécanique et de raccordement électrique entre le poste de conduite, le groupe motopropulseur et la direction. Les opérations de connection et de câblage électrique entre le poste de conduite et le groupe motopropulseur peuvent être entièrement réalisées sur le module avant 10 avant son montage sur la caisse du véhicule. De même le remplissage et la purge du circuit de refroidissement, incluant l'échangeur du groupe de climatisation 48, peuvent également être effectués sur le module avant. A l'issue de ces opérations le groupe motopropulseur peut être mis en marche normalement, c'est-à-dire à partir du poste de conduite, et il est ainsi possible de vérifier son fonctionnement correct avant l'opération de montage final sur la caisse du véhicule automobile.

Selon une variante, non représentée, le module avant 10 peut avantageusement être lui-même réalisé sous forme de sous-modules, préalablement assemblés indépendamment. Il est ainsi évident que le groupe motopropulseur constitue à lui-même un sous-module de même que chaque demi-train roulant avant, ainsi que par exemple également le groupe de climatisation. Un autre sous-module peut être constitué par l'ensemble formant support de la colonne de la direction et du pédalier 56, ce sous-module pouvant également supporter le poste de conduite sur lequel sont montés les combinés de commande et d'indication ainsi que le boîtier d'interconnection électrique, non représenté, et intégrer ainsi la plus grande partie du câblage électrique du poste de conduite.

Selon un premier mode de réalisation de l'invention, la paroi transversale 42 peut être fixée au berceau 10 par soudage sur les longerons de liaison 18 et sur la traverse 20, l'ensemble ainsi réalisé formant un tout de structure unitaire. Ce mode de réalisation permet de revêtir la paroi transversale 42 d'un matériau d'insonorisation, lors de l'assemblage du module avant 10 ainsi que tous les orifices de traversée du tablier avant 44 dont l'étanchéité peut être particulièrement soignée puisque ces opérations sont réalisées en dehors de la caisse du véhicule automobile et donc avec une très bonne accessibilité. Un module selon ce premier mode de réalisation se prête particulièrement bien au montage d'une crémaillère de direction dite haute et qui est fixée directement sur le tablier du véhicule. En effet les points d'attache du triangle de suspension supérieur et de la crémaillère sont implantés sur des pièces soudées entre elles dont les tolérances de montage sont faibles, ce qui procure une très bonne géométrie du train avant.

Selon un second mode de réalisation, la paroi transversale peut être fixée de manière démontable sur le berceau 12 par exemple par boulonnage. Ce type de réalisation a pour avantage de permettre la dépose du berceau 12 en vue d'effectuer des réparations sur le véhicule, la paroi transversale 42 restant, ainsi qu'on le verra plus loin, solidaire de la caisse du véhicule. Dans ce cas la paroi 42 pourra être réalisée, comme dans le premier cas, à partir d'une tôle en acier embouti et traitée en insonorisation de manière classique. Elle pourra également en variante être constituée par un sandwich de tôles présentant un très fort coefficient d'amortissement acoustique, ou encore être constituée par une paroi en matériau synthétique pouvant éventuellement servir de support aux différents composants du poste de conduite.

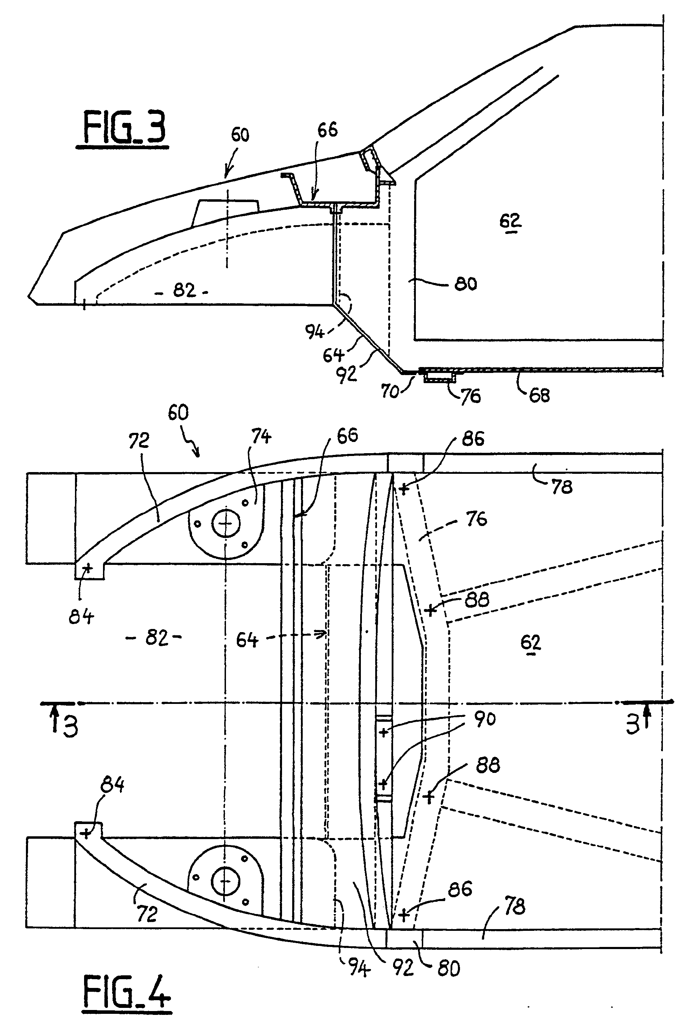

Les figures 3 et 4 sont une illustration de la partie avant de la caisse du véhicule automobile prévue pour recevoir le module avant 10 représenté aux figures 1 et 2.

La caisse 60 comprend, à la partie avant de l'habitacle 62, une ouverture 64 dont la forme et le pourtour sont complémentaires de ceux de la paroi transversale 42 du module avant 10. L'ouverture 64 s'étend depuis une structure inférieure 66 de bas de baie de pare-brise, jusqu'au plancher avant 68 de la caisse du véhicule. Le plancher avant 68 s'étend, vers la gauche en considérant les figures 3 et 4, à l'avant du véhicule de manière à ce que son bord avant 70 se situe sensiblement à l'aplomb du pédalier 56.

Des zones d'accostage et de fixation sont prévues autour de l'ouverture 64 pour coopérer avec des zones correspondantes de la paroi transversale 42 pour en permettre, par exemple, un collage structurel.

La structure de caisse représentée aux figures est bien entendu donnée à titre d'exemple et peut présenter de nombreuses variantes. C'est ainsi qu'à titre indicatif la structure de bas de baie 66 peut être constituée par une traverse caissonnée, ou bien par une pièce en forme d'auge servant de collecteur d'air pour le groupe de climatisation, ou bien par une combinaison de ces deux structures.

Un élément de renfort extérieur de doublure 72 s'étend du côté de la caisse jusqu'à la partie avant du véhicule en passant, soit à l'extérieur, soit à l'intérieur, soit des deux côtés du support d'élément porteur 74 dans une zone duquel vient prendre appui l'extrémité supérieure libre des organes de suspension 36. L'extrémité avant du plancher 68 est équipée d'une traverse 76 agencée au voisinage de son bord avant 70.

Chaque extrémité latérale de la traverse 76 est reliée à un longeron latéral 78 de la caisse, de préférence dans une zone proche du pied de porte avant correspondant 80.

En variante, et en particulier dans le cas où la paroi transversale 42 est soudée sur le berceau 12, il est possible de supprimer la traverse 76 du plancher avant 68, la traverse 20 du berceau 12 remplissant les mêmes fonctions que cette dernière après montage du module 10 sur la caisse 60. Comme on peut le constater notamment à la figure 4, l'agencement de la caisse de véhicule 60 qui vient d'être décrit délimité un évidement inférieur central 82 qui permet, comme cela va être exposé maintenant, de recevoir le module avant 10.

On décrira maintenant le procédé de montage du module avant 10 sur le caisse 60, l'ensemble des organes et composants équipant le module avant 10 ayant été préalablement assemblés.

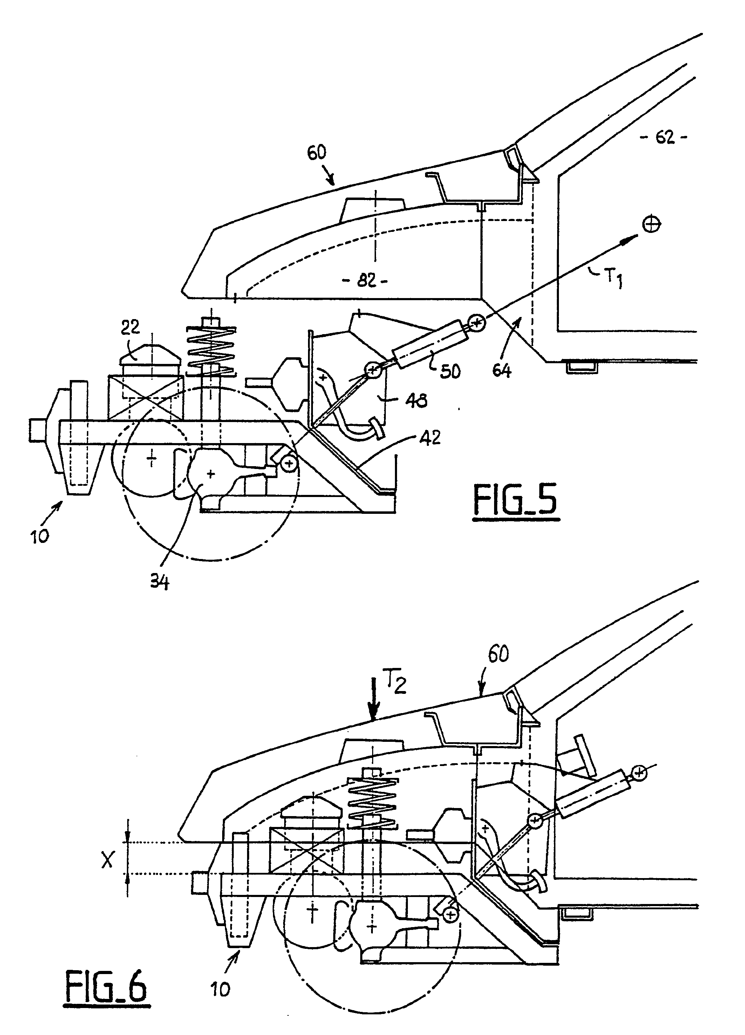

Lors d'une première étape d'approche, illustrée à la figure 5, la caisse 60 est déplacée relativement par rapport au module 10 par un mouvement de translation indiqué par la flèche $T_1$. Dans l'exemple présenté à la figure 5, la translation $T_1$ est une translation inclinée selon la même direction que celle de l'axe X-X de la colonne de direction 50 de manière à introduire le boîtier du dispositif de climatisation 48 et le poste de conduite dans l'habitacle au travers de l'ouverture 64 de la caisse du véhicule.

L'introduction est rendue possible grâce à l'évidement 82 et à l'ouverture 64 qui sont conformés de manière à permettre l'engagement du module dans la caisse lors du mouvement de translation $T_1$, ce dernier pouvant, en variante, être un mouvement de translation horizontal.

Lors d'une seconde étape de positionnement et de montage, représentée à la figure 6, la caisse 60 est déplacée relativement par rapport au module 10 selon un mouvement de translation verticale de manière à amener les organes de suspension 36 en appui contre la zone d'appui correspondante des parties 74 de la partie avant de la caisse 60 à l'issue d'une course verticale "X" de déplacement relatif.

Les mouvements de translation $T_1$ et $T_2$ qui viennent d'être mentionnés sont bien entendu des mouvements relatifs et il serait possible, en variante, de déplacer le module par rapport à la caisse.

Au cours d'une dernière étape, non représentée, et à l'issue des mouvements de translation $T_1$ et $T_2$, le module 10 et la caisse 60 sont fixés l'un à l'autre notamment par boulonnage au droit d'une partie rigide du module 10, et par collage ou boulonnage du pourtour de la paroi transversale 42 sur le pourtour de l'ouverture 64.

Dans le mode de réalisation représenté aux figures 1 à 4, on constate que le berceau 12 comporte de préférence 7 ou 8 points de fixation sur la caisse 60 qui sont agencés de la manière suivante :

— deux points de fixation avant 84 situés entre les parties avant des longerons de berceau 14 et le renfort de doublure 72 ;
— deux points de fixation latéraux arrière 86 situés aux extrémités latérales des traverses 20 et 18 ;
— deux points de fixation centraux arrière 88 situés à l'arrière des longerons de liaison 18 du berceau 12 et sur la traverse 76 du plancher 68 ; et
— un ou deux points de fixation supérieurs 90 de la colonne de direction sur la structure de bas de baie 66.

A titre de variante le contour du pourtour de la découpe de la caisse, et par conséquent de la paroi transversale 42 intégrée au module avant 10, peuvent présenter différents profils.

Un premier contour, limité à l'espace compris entre les doublures avant 72 se prolongeant parallèlement à l'axe de la caisse jusqu'à la traverse 76, peut être réalisé, le plancher 68 devant alors s'étendre latéralement en 92 pour venir rejoindre la tôle 94 enveloppant la roue.

Selon un second profil, il est également possible de réaliser un contour selon lequel la paroi transversale 42 s'étend au moins partiellement dans sa partie inférieure jusqu'aux longerons de côté de caisse 78.

Dans tous les cas, ainsi que cela a été mentionné plus haut, il est prévu un cordon de collage périphérique entre la paroi transversale 48 et le pourtour de l'ouverture 64 de la caisse 60. Ce cordon peut par exemple être déposé sur une zone matérialisée par deux surfaces parallèles pour les zones sensiblement horizontales, c'est-à-dire perpendiculaires à la direction de montage, ou dans une gouttière pour les surfaces verticales avec emboîtement éventuel, ainsi que cela est connu dans ce type de liaison.

L'opération de montage final se traduit donc par une opération de boulonnage du berceau 12 du module avant 10 sur la caisse 60 ainsi que par le collage périphérique de la paroi transversale 42.

A l'issue de ces diverses opérations, on constate que le module avant est prêt à fonctionner sur le véhicule automobile et que l'habitacle 62 est obturé définitivement dans sa partie avant adjacente au compartiment moteur.

Selon la première variante évoquée plus haut dans laquelle la paroi transversale 42 est soudée au module 10, la totalité du berceau 12 et de la paroi 42 sont intégrées après montage à la structure de la caisse du véhicule. Bien entendu tous les organes mécaniques ou d'équipement peuvent être démontés séparément pour réparation ou échange.

Selon l'autre variante dans laquelle la paroi transversale 42 est boulonnée sur le berceau 12, ou assemblée par tout autre moyen équivalent en permettant un démontage réciproque, la paroi transversale 42 est intégrée définitivement à la caisse 60 du véhicule automobile, mais le berceau 12 demeure démontable, ce qui permet une intervention en service après-vente plus rapide, notamment en cas de grosse réparation mécanique ou d'accident du véhicule.

Le montage de la planche de bord, qui comprend un élément d'habillage extérieur ainsi que certains organes assurent des fonctions internes telles que la distribution d'air, l'aération et le dégivrage, peut être réalisé de deux façons.

Il est possible de l'intégrer au module avant. Cette première solution impose cependant de réaliser une planche de bord de volume limité, ainsi qu'une découpe élargie dans le plancher de la caisse.

Dans une autre solution il est possible d'effectuer le montage séparé de la planche de bord comme une pièce d'habitacle 62, l'introduction pouvant se faire soit par la porte avant du véhicule, soit par la baie de pare-brise avant la mise en place de ce dernier.

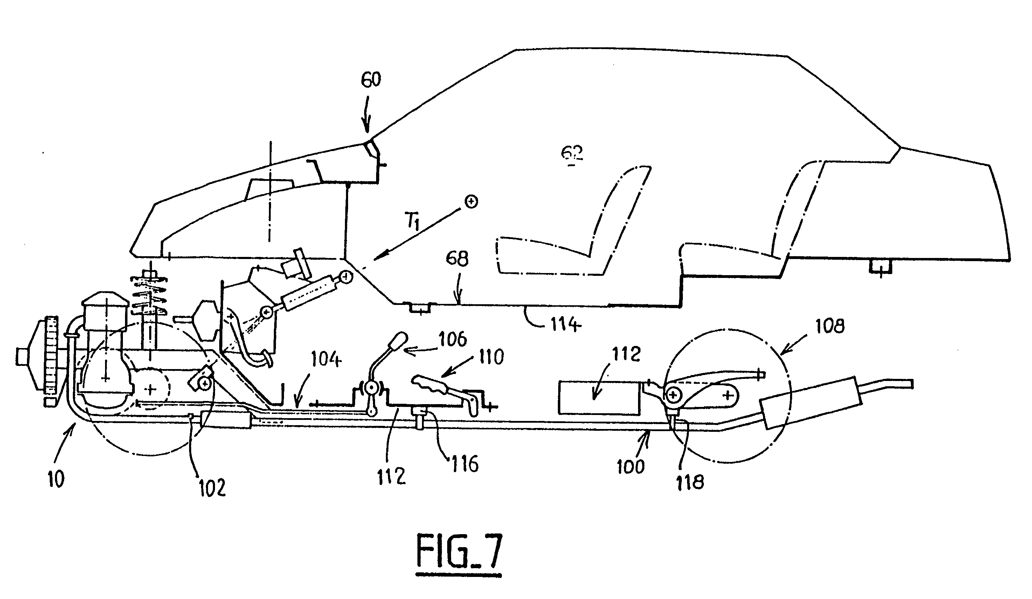

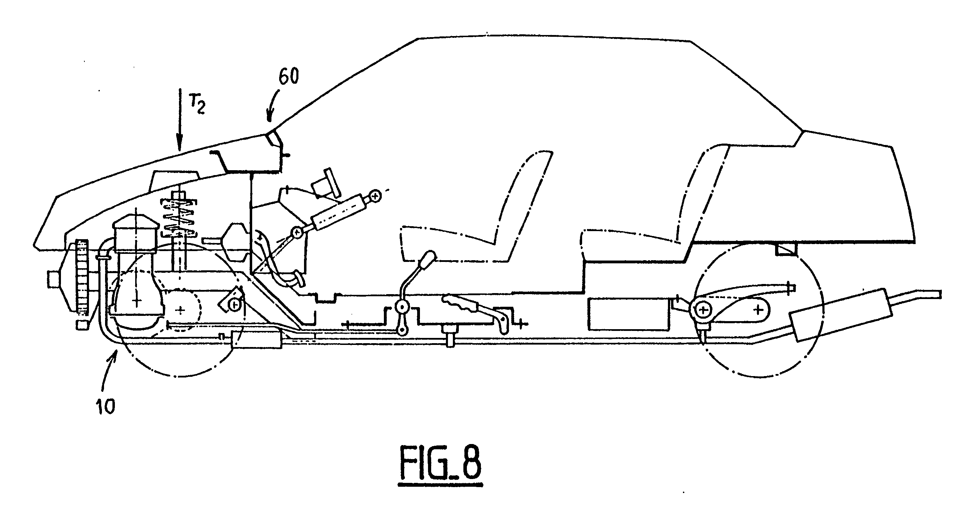

On décrira maintenant, en se référant aux figures 7 et 8, une variante du procédé de montage selon l'invention, et de conception de la structure de véhicule automobile, qui permet d'effectuer simultanément le montage de la quasi-totalité des composants et organes du soubassement du véhicule.

C'est ainsi qu'en partant de l'avant du véhicule il est possible d'adjoindre au module avant 10 :

— une ligne d'échappement complète 100, préalablement raccordée avec le collecteur d'échappement du groupe motopropulseur, la connection électrique d'une sonde 102 de contrôle de la teneur des gaz d'échappement en éléments polluants, pour le pilotage d'un dispositif de dépollution pouvant également être réalisée simultanément ;

— une commande de changement de vitesse 104 complète avec son levier 106 ;

— un train roulant arrière 108 ;

— les canalisations du circuit de freinage reliant l'ensemble des organes d'actionnement des freins, qui sont déjà préalablement mis en place (maître-cylindres, freins avant, freins arrière, et limiteur ou répartiteur de freinage), le circuit ainsi constitué pouvant être rempli purgé et testé ;

— une commande de frein à main 110 et ses câbles de liaison aux roues arrière et/ou avant ; et

— le réservoir de carburant 112 et sa tuyauterie d'alimentation le reliant au moteur, les connections électriques de la jauge de carburant et/ou d'une pompe électrique pouvant également être préalablement réalisées.

Tous ces organes, ainsi que le module avant 10, sont provisoirement maintenus en position sur un bâti de montage (non représenté), de manière connue, et tel que cela est notamment décrit dans le document EP-A-127.225.

Les mouvements de déplacement relatif de la caisse 60 par rapport au module 10 complété du bâti supportant les organes de soubassement, sont les mêmes que ceux qui ont été décrits en référence aux figures 5 et 6.

A la fin de ces deux mouvements de translation $T_1$ et $T_2$, tous les organes se trouvent en position correcte pour être fixés par vissage sur la caisse 60, par exemple le berceau avant 12, l'ensemble du train arrière 108, le réservoir 112 etc... Les opérations de vissage sont de préférence réalisées verticalement c'est-à-dire dans la même direction que la translation final de positionnement et de montage $T_2$.

Il est à noter que, au cours du mouvement de translation $T_2$, certains organes tels que le levier de changement de vitesse 106 et le levier de frein à main 110 doivent passer à travers des fenêtres du plancher 68 de la caisse 60 pour pénétrer et venir occuper leur position normale à l'intérieur de l'habitacle 62. Dans ce but ces organes sont portés par des platines 112 qui ont également pour fonction de venir obturer une ou plusieurs fenêtres 114 pratiquées dans le plancher 68.

Comme les organes principaux les platines 112 peuvent être fixées par vissage.

Le levier de changement de vitesse 106 et le levier de frein à main 110 peuvent avantageusement être groupés sur une platine unique 112 qui comporte également un support intermédiaire 116 pour recevoir la tuyauterie de la ligne d'échappement 100, le maintien de cette dernière étant complété par un autre support 118 relié au train arrière 108.

Selon une variante, non représentée, il est possible de réaliser une goulotte s'étendant depuis le berceau avant 12 jusqu'à l'ensemble du train arrière 108 et à l'intérieur de laquelle sont disposées les tuyauteries de frein et de carburant ainsi qu'éventuellement des éléments du faisceau de câblage électrique. Cette goulotte peut également être fixée sous le plancher du véhicule lors de l'opération d'assemblage.

La mise en oeuvre de l'invention est particulièrement avantageuse dans le cas où le véhicule est équipé de suspensions hydrauliques ou oléopneumatiques. On sait en effet que ces suspensions utilisent un grand nombre de conduites et de raccordements hydrauliques sous haute pression dont le montage et la vérification sur la caisse du véhicule ne sont pas particulièrement aisés.

Grâce à l'invention il est possible de constituer entièrement le circuit hydraulique du véhicule et de l'essayer avant son montage sur la caisse. Dans ce but il suffit de prévoir que la réserve, d'huile de suspension, soit agencée sur le module avant 10, les éléments porteurs avant devant être montés sur la caisse entièrement par la face inférieure c'est-à-dire en particulier les "sphères de suspension" qui doivent être logées sous les coupelles d'appui de la caisse. Enfin la commande du niveau de sus-pension peut être intégrée à la platine support 112.

## Revendications

1. Structure de véhicule automobile à caisse monocoque (60) comportant à l'avant d'un habitacle (62), entre une extrémité (70) d'un plancher (68) et une traverse de baie de pare-brise (66), une ouverture (64) obturée par une paroi transversale (42) faisant partie d'un module (10) qui comprend, en avant de la paroi (42), un groupe motopropulseur (22) avec ses organes annexes et un train de roue avant (34) avec ses organes de suspension (36), de freinage et de direction, et, en arrière de la paroi (42), un boîtier d'un dispositif de climatisation (48) et un poste de conduite comportant une colonne de direction inclinée (50) qui est introduite dans l'habitacle par ladite ouverture (64) lors de l'opération d'assemblage du module (10) avec la caisse (60) du véhicule, caractérisée en ce que la caisse monocoque comporte une partie avant qui s'étend en avant de la baie de pare-brise, repose sur le train de roue avant, et qui présente un évidement inférieur central (82) recevant une partie du module (10), cet évidement (82) et ladite ouverture (64) étant conformés de manière à permettre l'engagement du module (10) dans la caisse (60) lors d'un mouvement relatif d'approche de la caisse par rapport au module par une translation $(T_1)$ horizontale, ou inclinée (X-X) sensiblement comme la colonne de direction, suivi d'un mouvement relatif de positionnement et de montage par une translation verticale $(T_2)$.

2. Structure de véhicule automobile selon la revendication 1 caractérisée en ce que le module (10) comporte un berceau (12) qui porte lesdits groupe et organes, la paroi transversale (42) étant fixée au berceau.

3. Structure de véhicule selon la revendication 2 caractérisée en ce que la paroi transversale (42) est fixée au berceau par soudage ou par boulonnage.

4. Structure de véhicule selon l'une des revendications 2 ou 3 caractérisée en ce que le berceau (12) comporte une traverse (20) agencée à proximité de l'extrémité avant (70) du plancher (68) de la caisse (60).

5. Structure de véhicule selon la revendication 4 caractérisée en ce que le berceau (12) comporte des longerons latéraux (18) reliés à la traverse (20) dont les parties avant comportent des moyens de liaison pour lesdits organes de suspension, et dont les parties arrière comportent des moyens de fixation (88) permettant de les relier à la caisse du véhicule sous le plancher.

6. Structure de véhicule selon l'une quelconque des revendications précédentes caractérisée en ce que le module (10) comporte en outre des organes de commande (106, 110), notamment d'une boîte de vitesse et/ou d'un frein de stationnement, portés par une platine (112) qui obture une fenêtre (114) pratiquée dans le plancher (68) et qui est dimensionnée de manière à permettre l'introduction des organes de commande dans l'habitacle (62) lors de l'opération de montage du module sur la caisse du véhicule par lesdits mouvements d'approche et de montage.

7. Procédé de montage d'un véhicule automobile dont la structure est conforme à l'une quelconque des revendications 1 à 6, caractérisé en ce que le module (10), préalablement équipé desdits groupe et organes, et la caisse (60) sont, au cours d'une étape d'approche, déplacés relativement l'un par rapport à l'autre par une translation $(T_1)$ horizontale, ou inclinée sensiblement comme la colonne de direction (X-X), de manière à introduire le boîtier du dispositif de climatisation et le poste de conduite dans l'habitacle par ladite ouverture (64), puis, au cours d'une étape de positionnement et de montage, déplacés relativement suivant une translation verticale $(T_2)$ de manière à amener lesdits organes de suspension en appui contre une zone d'appui correspondante de la partie avant de la caisse, et en ce qu'ils sont enfin fixés l'un à l'autre par boulonnage au droit d'une partie rigide du module, et par collage ou boulonnage du pourtour de la paroi transversale sur le pourtour de ladite ouverture.

8. Procédé d'assemblage selon la revendication 7 caractérisé en ce que le module (10) et divers organes du véhicule, tels qu'un train de roue arrière (118), un dispositif d'échappement (110), des circuits électriques ou hydrauliques, sont préalablement agencés et maintenus sur un bâti de montage, et en ce que la caisse est déplacée relativement à ce bâti suivant lesdits mouvements d'approche et de montage.

## Patentansprüche

1. Kraftfahrzeugstruktur mit einer selbsttragenden Karosserie (60), die vor einem Karosseriegehäuse (62) zwischen einem Ende (70) eines Bodens (68) und einer Traverse (66) des Windschutzscheibenrahmens eine Öffnung (64) besitzt, die durch eine Querwand (42) verschlossen ist, die einen Teil eines Moduls (10) bildet, das vor der Wand (42) eine Triebwerksgruppe (22) mit ihren Zusatzorganen und einem Vorderradachssatz (34) mit ihren Aufhängungs-, Brems- und Lenkorganen und hinter der Wand (42) das Gehäuse (48) einer Klimaanlage und eine Bedienungseinheit mit einer geneigten Lenksäule (50) besitzt, die während des Arbeitsgangs des Zusammenbaus des Moduls (10) mit der Karosserie (60) des Fahrzeugs durch die Öffnung (64) in das Karosseriegehäuse eingeführt wird, dadurch gekennzeichnet, daß die selbsttragende Karosserie einen vorderen Teil besitzt, der sich vor dem Windschutzscheibenrahmen erstreckt, auf dem Vorderradachssatz aufliegt und eine untere zentrale Ausnehmung (82) besitzt, die einen Teil des Moduls (10) aufnimmt, wobei diese Ausnehmung (82) und diese Öffnung (84) so ausgebildet sind, daß sie die Einführung des Moduls (10) in die Karosserie (60) bei einer relativen Annäherungsbewegung der Karosserie bezüglich des Moduls durch eine Verschiebung (T₁) gestattet, die horizontal oder im wesentlichen wie die Lenksäule geneigt (X-X) ist, auf welche eine relative Positionierungs- und Montagebewegung durch eine vertikale Verschiebung (T₂) folgt.

2. Kraftfahrzeugstruktur nach Anspruch 1, dadurch gekennzeichnet, daß das Modul (10) ein Traggestell (12) besitzt, das die Triebwerksgruppe und die Zusatzorgane trägt, wobei die Querwand (42) an dem Traggestell befestigt ist.

3. Fahrzeugstruktur nach Anspruch 2, dadurch gekennzeichnet, daß die Querwand (42) an dem Traggestell durch Verschweißung oder Verschraubung befestigt ist.

4. Fahrzeugstruktur nach einem der Ansprüche 2 oder 3, dadurch gekennzeichnet, daß das Traggestell (12) eine Traverse (20) besitzt, die in Nähe des vorderen Endes (70) des Bodens (68) der Karosserie (60) angeordnet ist.

5. Fahrzeugstruktur nach Anspruch 4, dadurch gekennzeichnet, daß das Traggestell (12) mit der Traverse (20) verbundene seitliche Längsholme (18) besitzt, deren vordere Teile Verbindungseinrichtungen für die Aufhängungsorgane besitzen und deren hintere Teile Befestigungseinrichtungen (88) besitzen, die ihre Verbindung mit der Karosserie des Fahrzeugs unter dem Boden gestatten.

6. Fahrzeugstruktur nach einem der vorhergehenden Ansprüche, dadurch gekennzeichnet, daß das Modul (10) außerdem Steuerorgane (106, 110), insbesondere eine Schaltung und/oder eine Handbremse, besitzt, die von einer Platine (112) getragen sind, die ein in dem Boden (68) vorgesehenes Fenster (114) abschließt, das so bemessen ist, daß es bei dem Arbeitsgang der Montage des Moduls an der Karosserie des Fahrzeugs durch die Annäherungs- und Montagebewegungen die Einführung der Steuerorgane in das Karosseriegehäuse (62) gestattet.

7. Verfahren zur Montage eines Kraftfahrzeugs mit einer Struktur nach einem der Ansprüche 1 bis 6, dadurch gekennzeichnet, daß das zuvor mit der Triebwerksgruppe und den Zusatzorganen bestückte Modul (10) und die Karosserie (60) während einer Annäherungsphase zueinander durch eine Verschiebung (T₁) bewegt werden, die horizontal oder im wesentlichen wie die Lenksäule geneigt ist (X-X), so daß das Gehäuse der Klimaanlage und die Bedienungseinheit durch die Öffnung (64) in das Karosseriegehäuse eingeführt werden, und dann in einer Positionierungs- und Montagephase zueinander in einer vertikalen Verschiebung (T₂) bewegt werden, so daß die Aufhängungsorgane an einer entsprechenden Anlagezone des vorderen Teils der Karosserie in Anlage gebracht werden, und daß sie schließlich aneinander durch Verschraubung an einem starren Teil des Moduls und durch Verklebung oder Verschraubung des Umfangs der Querwand an dem Umfang der Öffnung befestigt werden.

8. Montageverfahren nach Anspruch 7, dadurch gekennzeichnet, daß das Modul (10) und verschiedene Organe des Fahrzeugs wie ein Hinterradachssatz (118), eine Auspuffeinrichtung (110), elektrische oder hydraulische Schaltungen zuvor auf einem Montagerahmen angeordnet und gehalten werden und daß die Karosserie bezüglich dieses Rahmens in den Annäherungs- und Montagebewegungen bewegt wird.

## Claims

1. Motor vehicle structure having a monocoque body (60) comprising, in front of an occupant compartment (62), between one end (70) of a floor (68) and a cross-piece (66) of a windscreen bay, an opening (64) closed off by a transverse wall (42) which is part of a module (10) which comprises, in front of the wall (42), an engine unit (22) with its attached elements and a front wheel-and-axle set (34) with its suspension elements (36), braking and steering elements and, behind the wall (42), a housing for an air conditioning device (48), and a driver post comprising an inclined steering column (50) which is inserted into the occupant compartment by way of the said opening (64) during the operation of assembling the module (10) with the vehicle body (60), **characterised in that** the monocoque body comprises a front part which extends in front of the windscreen bay, rests on the front wheel-and-axle set, and has a central lower recess (82) receiving a part of the module (10), this recess (82) and the said opening (64) being shaped so as to enable the fitting of the module (10) into the body (60) during a relative approach movement of the body in relation to the module by means of a translation (T₁) which is horizontal or inclined (X-X) substantially in the manner of the steering column, followed by a relative positioning and mounting movement by means of a vertical translation (T₂).

2. Motor vehicle body according to claim 1, **characterised in that** the module (10) comprises a cradle (12) which carries the said engine unit and elements, the transverse wall (42) being attached to the cradle.

3. Vehicle structure according to claim 2, **characterised in that** the transverse wall (42) is attached to the cradle by welding or by screw-bolt connection.

4. Vehicle structure according to one of claims 2 or 3, **characterised in that** the cradle (12) comprises a cross-piece (20) arranged near the front end (70) of the floor (68) of the body (60).

5. Vehicle structure according to claim 4, **characterised in that** the cradle (12) comprises side members (18) connected to the cross-piece (20), the front parts of which comprise connection means for the said suspension elements, and the rear parts of which comprise attachment means (88) enabling them to be connected to the vehicle body under the floor.

6. Vehicle structure according to any one of the preceding claims, **characterised in that** the module (10) further comprises control elements (106, 110), in particular a case for a gearbox and/or a parking brake, carried on a plate (112) which closes off a window (114) cut in the floor (68) and dimensioned so as to enable the control elements to be inserted into the occupant compartment (62) during the operation of mounting the module on the vehicle body by means of the said approaching and mounting movements.

7. Method for assembling a motor vehicle, the structure of which is in accordance with any one of claims 1 to 6, **characterised in that** the module (10), provided beforehand with the said engine unit and elements, and the body (60), are, in the course of an approach stage, displaced in relation to each other by means of a translation $(T_1)$ which is horizontal or inclined (X-X) substantially in the manner of the steering column, so as to insert the housing of the air conditioning device and the driver post into the occupant compartment by way of the said opening (64), then, in the course of a positioning and mounting stage, displaced in relative manner according to a vertical translation $(T_2)$ so as to bring the said suspension elements to bear against a corresponding support zone on the front part of the body, and in that they are finally attached to each other by screw-bolt connection at right angles to a rigid part of the module, and by gluing or screw-bolt connection of the circumference of the transverse wall to the circumference of the said opening.

8. Assembly method according to claim 7, **characterised in that** the module (10) and various elements of the vehicle, such as a rear wheel-and-axle set (118), an exhaust arrangement (110), and electrical or hydraulic circuits, are fitted together beforehand and held on an assembly frame, and in that the body is displaced in relation to this frame according to the said approaching and mounting movements.

FIG.1

FIG.2

FIG.3

FIG.4

FIG. 5

FIG. 6

FIG.7

FIG.8

EP 0 311 466 B1